# EUROPEAN PATENT SPECIFICATION

(11) **EP 3 584 035 B1**
(45) Date of publication and mention of the grant of the patent: **11.05.2022**
(21) Application number: 19180894.8
(22) Date of filing: 18.06.2019
(51) Int. Cl.: B24B 53/00, B24B 53/06, B24B 49/12, B24B 49/04, B23K 26/08, B23K 26/361

(54) **UNIVERSAL AUTOMATIC COMPOSITE GRINDING WHEEL FINISHER**
UNIVERSELLE AUTOMATISCHE VERBUNDSTOFFFEINSCHLEIFSCHEIBE
ROUE DE MEULAGE DE FINITION COMPOSITE AUTOMATIQUE UNIVERSELLE

(30) Priority: 19.06.2018 CN 201810631638
(43) Date of publication of application: 25.12.2019
(73) Proprietor: Hunan University, Changsha, Hunan 410082 (CN)
(72) Inventor: CHEN, Genyu, Changsha, Hunan 410082 (CN); LI, Xiaobao, Changsha, Hunan 410082 (CN); CHANG, Ming, Changsha, Hunan 410082 (CN)
(74) Representative: Vitina, Maruta

(56) References cited:
- CN-A- 101 190 503
- CN-A- 103 522 190
- CN-A- 105 479 340
- CN-A- 109 420 936

## Description

### TECHNICAL FIELD

The present disclosure relates to a grinding wheel finisher, in particular to a universal automatic composite grinding wheel finisher.

### BACKGROUND

Grinding wheel, also known as a fixed abrasive tool, is a bonded abrasive that is fixed into a certain shape (such as a circular shape with a through hole in the center) and has a certain strength. It is generally composed of abrasive, bonding agent and pores. These three parts are often referred to as the three elements of the fixed abrasive tool. The grinding wheel is classified according to the different bonding agents, and the ceramic grinding wheel, the resin bonding agent grinding wheel and the metal bonding agent grinding wheel are common. Grinding wheel is widely used. Grinding wheel is rotated at high speed during use, and can be used for coarse grinding, semi-finishing and refining as well as slotting and cutting on outer circle, inner circle, plane and various profiles of metal or non-metal workpieces.

Superhard abrasive wheel finishing is usually divided into two processes of shaping and sharpening. Shaping is to remove particles from the surface of the grinding wheel, so that the grinding wheel forms a geometric shape that meets the precision requirements; sharpening is to remove the bonding agent between the abrasive grains, so that there are certain space between the abrasive grains and that the abrasive particles protrude from the bonding agent and form a cutting edge. The commonly used shaping methods for forming wheel finishing include turning method, grinding method, extrusion method, diamond roller method and electric machining method; the sharpening methods mainly include three types: consolidated abrasive, free abrasive and electrical processing. Among them, the electric machining finishing method is only used for the metal bond super-abrasive grinding wheel, and includes electrolytic finishing method and electric spark finishing method.

The current forming wheel finishing technology still has certain limitations. For example, when the turning method i and the cup-shaped grinding wheel are used for finishing, the finishing tool has faster loss and low precision; the diamond roller has high finishing precision, but the efficiency is not high, and the roller profile is complicated and difficult to manufacture; the electric spark finishing method has high precision, but the finishing speed is slow; the electrolytic finishing method is fast but it is difficult to shape, and due to the electric field, flow field, and electrode reaction dynamic process between the cathode tool and the grinding wheel, the machining gap is not uniform, so that the surface roughness after finishing is not ideal; electrolytic finishing method needs provision of special power source, electrode and electrolyte. The device is expensive and has certain special requirements. Chinese Publication No. 105479340A discloses an automatic composite grinding wheel finisher, which includes a workpiece working mechanism, an electric spark finishing mechanism, a projection monitoring device and a motion control mechanism. In the grinding wheel finisher, a high-definition camera is provided to detect in real time the profile of the grinding wheel and send the results to an image processing system, and then the information is fed to the motion control mechanism, which compensates the finishing process accordingly. Though this finisher achieve the automatic operation, it still remains to be improve in the detection efficiency and finishing efficiency It can be seen that the current metal-based diamond wheel finishing method has more or less disadvantages such as high cost, low efficiency, low precision, narrow adaptability, low degree of automation, and complicated operation.

### SUMMARY

In view of the deficiencies in the prior art mentioned above, the present disclosure provides a universal automatic composite grinding wheel finisher, which is a high-efficiency composite grinding wheel automatic finisher for finishing the size, shape and geometric angle of a super-hard abrasive grinding wheel. The whole machine, through electric spark and laser roughing and mechanical finishing, achieves the purpose of precision finishing of various types of grinding wheels including forming grinding wheel and flat grinding wheel, and provides a grinding wheel finishing device for fisnishing of super hard material grinding wheel with low cost, high efficiency, high precision, adaptability, high degree of automation and simple operation.

To achieve the above object, the present disclosure provides the following technical solutions:
A universal automatic composite grinding wheel finisher, wherein the finisher comprises a workpiece working mechanism, a finishing mechanism, a detecting mechanism and a motion control mechanism, the workpiece working mechanism, the finishing mechanism and the detecting mechanism being respectively connected to the motion control mechanism;

The workpiece working mechanism adjusts a grinding wheel to be finished to a desired position for finishing, and causes the grinding wheel to operate in a posture required for finishing;

The finishing mechanism comprises a finishing feed device, a spindle S2, a laser finishing device, an electric spark finishing device and a mechanical finishing device, the spindle S2 and the laser finishing device being mounted on the finishing feed device, the spark finishing device or the mechanical finishing device being mounted at an end of the spindle S2 the finishing mechanism driving the laser finishing device, the spark finishing device or the mechanical finishing device to move to a desired position by the finishing feed device, for finishing the grinding wheel;

The detecting mechanism comprises a projection monitoring device and a re-imaging detection device; the projection monitoring device being fixed above the workpiece working mechanism to monitor a finishing of the grinding wheel in real time; the re-imaging detection device comprises a spacer, a re-imaging guide rail, and a re-imaging slider, re-imaging table, a pressing plate, a re-imaging column, a camera mounting bracket, a re-imaging camera, a parallel backlight, and a graphite plate or ceramic plate; the re-imaging guide rail being fixed on the workpiece working mechanism by the spacer, the re-imaging table being disposed at the re-imaging guide rail by re-imaging slider, the re-imaging slider cooperating with the re-imaging guide rail, and the pressing plate pressing the graphite plate or ceramic plate on the re-imaging table; the re-imaging table driving the graphite plate or ceramic plate to move on the re-imaging guide rail by the re-imaging slider, the graphite plate or ceramic plate re-imaging a finishing profile of the grinding wheel; the re-imaging column being fixed on the workpiece working mechanism, and the re-imaging camera being mounted on the re-imaging column by the camera mounting bracket the parallel backlight being mounted on the workpiece working mechanism at a position directly below a lens of the re-imaging camera and illuminating the graphite plate or ceramic plate, and the re-imaging camera taking a re-imaging profile image;
the re-imaging detection device being disposed on the workpiece working mechanism, performing online re-imaging detection on the finishing of the grinding wheel, and transmitting a detection result to the motion control mechanism; and

The motion control mechanism obtains a machining allowance and an accuracy according to the detection result, determines whether the grinding wheel is finished, and based on the determination result, the motion control mechanism controls the workpiece working mechanism, the finishing mechanism, and the detection mechanism to operate.

Further, the finishing feed device comprises a longitudinal Y-axis screw rod guide rail assembly, a finishing table support plate, a vertical Z-axis screw rod guide rail assembly and a finishing table, the longitudinal Y-axis screw rod guide rail assembly and the vertical Z-axis screw rod guide rail assembly being vertically disposed at two sides of the finishing table support plate, the finishing table support plate being moved along a longitudinal Y-axis on a side of the workpiece working mechanism by the longitudinal Y-axis screw rod guide rail assembly; the finishing table being moved on the finishing table support plate along the vertical Z-axis by the vertical Z-axis screw rod guide rail assembly; and the spindle S2 being mounted on the finishing table.

Further, the laser finishing device comprises a laser head, a conductive fiber, and a laser, the laser head being attached to the finishing table, the laser being connected to the laser head via the conductive fiber, and the laser emitting a laser through the laser head and performing laser finishing to the grinding wheel.

Further, the electric spark finishing device comprises an electric spark power source and an electric spark positive electrode, the electric spark positive electrode being at an end of the spindle S2, the spark power source suppling power to the spark positive electrode, and the spark positive electrode performing spark finishing to the grinding wheel by the spindle S2.

Further, the spark positive electrode is a disc-shaped member made of copper material or an electroplated metal grinding wheel that meets a discharge requirement.

Further, the mechanical finishing device is a mechanical roller, the mechanical roller being mounted on an end of the spindle S2, mechanically finishing the grinding wheel with the spindle S2.

Further, the projection monitoring device comprises a longitudinal S-axis screw rod guide rail assembly, a projection support plate, a transverse R-axis screw rod guide rail assembly, projector mounting bracket and a projector;

The longitudinal S-axis screw rod guide rail assembly and the transverse R-axis screw rod guide rail assembly being vertically disposed on opposite sides of the projection support plate, and the projection support plate being moved along a longitudinal S-axis above the workpiece operating mechanism by the longitudinal S-axis screw rod guide rail assembly; the projector mounting bracket being mounted on the projection support plate by the transverse R-axis screw rod assembly, the projector being disposed on the projector mounting bracket and being above the grinding wheel by movement of the transverse R-axis screw rod guide rail assembly on the projection support plate along a transverse R-axis.

Further, the finisher further comprises a tool body, the tool body comprising a base, a gantry bracket and a projection column, the workpiece working mechanism being mounted on the base, the gantry bracket being vertically mounted at a right side of the base, and the finishing mechanism being mounted on the gantry bracket by the finishing feed device; the projection column being vertically mounted at a rear side of the base, the projection monitoring device being mounted on the projection column; and the base, the gantry bracket and the projection column being made of marble.

Further, the motion control mechanism comprises a numerical control system and a servo motor, the numerical control system being connected to the re-imaging detection device, receiving a re-imaging profile image taken by the re-imaging detection device and determining whether finishing of the grinding wheel meets requirement, the numerical control system being connected to the servo motor, the servo motor being connected to the workpiece working mechanism, the finishing mechanism being connected to the detecting mechanism, and the motion control mechanism controlling the workpiece working mechanism, the finishing mechanism and the detecting mechanism to operate by the numerical control system.

The beneficial effects of the present disclosure are as follows:
The present disclosure utilizes the laser finishing device and the electric spark finishing device to roughly finish the grinding wheel, and then uses the mechanical finishing device to finish the grinding wheel, thereby realizing precise finishing of various types of grinding wheels including the forming grinding wheel and the flat grinding wheel. The present disclosure provides a grinding wheel finishing device with low cost, high efficiency, high precision, wide adaptability, high degree of automation and simple operation for finishing of super hard material grinding wheel.

In the finishing process, the grinding wheel does not need to be removed, and the laser method, the electric spark method and the mechanical method are continuously used for finishing to achieve high efficiency and high precision finishing, and the finishing is widely adaptable and the cost is low.

Laser rough finishing uses actual effective spot removal radius law obtained from the initial processing to approximately compenstae the effective spot removal radius of the machining, and design the machining path into a similar bending line. By approximating the compensation, twist, tilt and misalignment of the grinding wheel profile are automatically finished.

The present disclosure realizes on-line monitoring by the projection monitoring device to prevent the grinding wheel from being over-finished, and uses the re-imaging detection device to assist in checking whether the margin detecting and the online detecting finishing are qualified.

The tool body of the present disclosure is made of marble material with high precision, reaches the linear expansion coefficient of the tool body, is not easy to be deformed, has small thermal expansion coefficient, and is minimally affected by temperature; and the present disclosure improves the finishing precision during finishing. In addition, the present disclosure also improves the automation degree of the machine tool through the numerical control system, and the finishing operation is simple.

### BRIEF DESCRIPTION OF THE DRAWINGS

Figure 1 is a schematic view showing the overall structure of a universal automatic composite grinding wheel finisher of the present disclosure;
Figure 2 is a front view of the universal automatic composite grinding wheel finisher of the present disclosure;
Figure 3 is a schematic view of a finishing mechanism in the universal automatic composite grinding wheel finisher of the present disclosure;
Figure 4 is a schematic view of a projection monitoring device in the universal automatic composite grinding wheel finisher according to the present disclosure;
Figure 5 is a schematic view of a re-imaging detection device in the universal automatic composite grinding wheel finisher of the present disclosure;
Figure 6 is a schematic view showing the principle of re-imaging detection in the universal automatic composite grinding wheel finisher of the present disclosure;
Figure 7 is a schematic view showing the profile shaping error of the grinding wheel in the universal automatic composite grinding wheel finisher of the present disclosure;
Figure 8 is a schematic view showing the working process of the universal automatic composite grinding wheel finisher of the present disclosure;
Figure 9 is a schematic view showing the principle of laser automatic compensation finishing in the universal automatic composite grinding wheel finisher of the present disclosure;
Figure 10 is a schematic diagram of a laser automatic compensation finishing processing path in the universal automatic composite grinding wheel finisher of the present disclosure.

Numerical references: 11-base, 12-gantry bracket, 13-projection column, 21-workpiece feeding device, 211-transverse X-axis screw rod guide rail assembly, 212-support bottom plate, 213-longitudinal V-axis screw rod guide rail assembly, 214-workpiece support plate, 215-transverse U-axis screw rod guide rail assembly, 216-workpiece table, 22-spindle S1, 23-grinding wheel, 31-finishing feed device, 311-longitudinal Y-axis screw rod guide rail assembly, 312-finishing table support plate, 313-vertical Z-axis screw rod guide rail assembly, 314-finishing table, 32-spindle S2, 33-laser finishing device, 331-laser head, 332-mounting bracket, 333-conductive fiber, 334-laser, 34-electric spark finishing device, 341-electric spark positive pole, 35-mechanical finishing device, 351-mechanical roller, 41-projection monitoring device, 411-longitudinal S-axis screw rod guide rail assembly, 412-projection support plate, 413-transverse R-axis screw rod guide rail assembly, 414-projector mounting bracket, 415-projector, 416-auxiliary light source, 42-re-imaging detection device, 421-spacer, 422-re-imaging guide rail, 423-re-imaging slider, 424- re-imaging table, 425-pressing plate, 426- re-imaging column, 427-camera mounting bracket, 428-re-imaging camera, 429-parallel backlight, 43- graphite plate or ceramic plate, 61- exhaust port.

### DETAILED DESCRIPTION OF EMBODIMENTS

The specific embodiments of the present disclosure are further described in detail below with reference to the drawings and embodiments. The following embodiments are intended to illustrate the present disclosure but are not intended to limit the scope of the present disclosure.

The orientation terms such as upper, lower, left, right, front, and rear in the present application are established based on the positional relationship shown in the drawings. For different drawings, the corresponding positional relationship may also change accordingly, so it cannot be understood as a limitation to the protection scope of the present application.

The embodiment describes a universal automatic composite grinding wheel finisher, which comprises a tool body, a workpiece working mechanism, a finishing mechanism, a detecting mechanism, a motion control mechanism and an exhaust dust removing system. The workpiece working mechanism, the finishing mechanism, the detecting mechanism and the exhaust dust removing system are placed on the tool body and connected to the motion control mechanism.

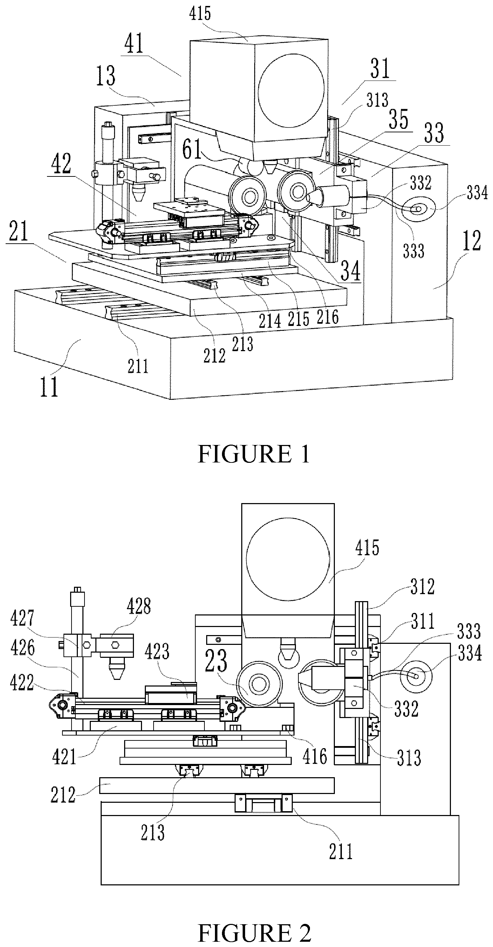

As shown in figure 1, the tool body includes a base 11, a gantry bracket 12, and a projection column 13. The base 11, the gantry bracket 12 and the projection pillar 13 are all made of marble material with low thermal expansion coefficient, so that the tool body conforms to the linear expansion coefficient required. The gantry bracket 12 is vertically mounted at the right side of the base 11 by bolts for mounting of the finishing mechanism. The projection column 13 is vertically mounted at the rear side of the base 11 by bolts for mounting of the detecting mechanism.

As shown in figures 1 to 3, the workpiece working mechanism includes a workpiece feeding device 21 and a spindle S1 22 disposed on the workpiece feeding device 21. The workpiece feeding device 21 includes a transverse X-axis screw rod guide rail assembly 211, a support bottom plate 212, a longitudinal V-axis screw rod guide rail assembly 213, a workpiece support plate 214, a transverse U-axis screw rod guide rail assembly 215, and a workpiece table 216. The support bottom plate 212 is mounted on the base 11 by the transverse X-axis screw rod guide rail assembly 211 and is movable on the base 11 along the transverse X-axis by the transverse X-axis screw rod guide rail assembly 211. The workpiece support plate 214 is mounted on the support bottom plate 212 by a longitudinal V-axis screw rod guide rail assembly 213 and is movable along the longitudinal V-axis on the support bottom plate 212 by the longitudinal V-axis screw rod guide rail assembly 213. The workpiece table 216 is mounted on the workpiece support plate 214 by a transverse U-axis screw rod guide rail assembly 215 and is movable along the transverse U-axis on the workpiece support plate 214 by the transverse U-axis screw rod guide rail assembly 215. The spindle S1 22 is mounted on the workpiece table 216 by bolts, and the grinding wheel 23 to be finished is mounted on an end of the spindle S1 22 and is adjusted to the desired position by the workpiece feeding device 21. The spindle S1 22 drives the grinding wheel 23 to act in a posture required for finishing, so as to facilitate finishing of the grinding wheel 23 by the finishing mechanism.

As shown in figures 1 to 3, the finishing mechanism includes a finishing feed device 31, a spindle S2 32, a laser finishing device 33, an electric spark finishing device 34, and a mechanical finishing device 35. The spindle S2 32 and the laser finishing device 33 are mounted on the finishing feed device 31, and the spark finishing device 34 and the mechanical finishing device 35 are mounted at an end of the spindle S2 32. The finishing mechanism drives the laser finishing device 33, the electric spark finishing device 34 or the mechanical finishing device 35 to move to the position required for finishing through the finishing feed device 31, for finishing of the grinding wheel 23.

The finishing feed device 31 includes a longitudinal Y-axis screw rod guide rail assembly 311, a finishing table support plate 312, a vertical Z-axis screw rod guide rail assembly 313 and a finishing table 314. The longitudinal Y-axis screw rod guide rail assembly 311 and the vertical Z-axis screw rod guide rail assembly 313 are vertically disposed on both sides of the finishing table support plate 312. The finishing table support plate 312 is connected to the gantry bracket 12 through the longitudinal Y-axis screw rod guide rail assembly 311, is located at one side of the workpiece working mechanism, and can move on the gantry bracket 12 along the longitudinal Y-axis by the longitudinal Y-axis screw rod guide rail assembly 311. The finishing table 314 is connected to the finishing table support plate 312 by a vertical Z-axis screw rod guide rail assembly 313 and is movable on the vertical table support plate 312 along the vertical Z-axis by the vertical Z-axis screw rod guide rail assembly 313.

The spindle S2 32 is mounted on the finishing table 314 by bolts, and the electric spark finishing device 34 or the mechanical finishing device 35 is mounted at an end of the spindle S2 32. The finishing feed device 31 drives the spindle S2 32 to move, thereby driving the spark finishing device 34 or the mechanical finishing device 35 to move to the desired finishing position to perform electric spark finishing or mechanical finishing of the grinding wheel 23.

The laser finishing device 33 includes a laser head 331, a mounting bracket 332, a conductive fiber 333, and a laser 334. The mounting bracket 332 is fixed to the finishing table 314 by bolts. The laser head 331 is locked to the mounting bracket 332 by bolts, and the laser 334 is conducted. The optical fiber 333 is connected to the laser head 331, and the laser 334 is fixed to the finishing table 314. The laser 334 emits laser light through the laser head 331 to perform laser finishing of the grinding wheel 23.

The electric spark finishing device 34 includes a spark power source and a spark positive pole 341. The spark power source is connected to the spark positive pole 341 to supply power to the spark positive pole 341. In this embodiment, the spark positive pole 341 can be a disc-shaped member made of copper material or an electroplated metal grinding wheel that meets the discharge requirement. The spark positive electrode 341 is mounted at an end of the spindle S2 32 through a flange, moves to the finishing position with the spindle S2 32, and performs electric spark finishing on the grinding wheel 23 under the driving of the spindle S2 32.

In this embodiment, the mechanical finishing device 35 is a mechanical roller 351. After the electric spark finishing, the mechanical roller 351 instead of the spark positive electrode 341 is mounted on the spindle S2 32 and moves to the finishing position with the spindle S2 32, and the spindle S2 32 drives the mechanical roller 351 to mechanically finish the grinding wheel 23.

As shown in figure 1, the detecting mechanism includes a projection monitoring device 41 and a re-imaging detection device 42. The projection monitoring device 41 is disposed on the projection column 13 and above the main axis S1 22, and performs projection detection on the grinding wheel 23 by the projection monitoring device 41 to monitor the finishing of the grinding wheel 23 in real time, thereby effectively preventing the grinding wheel 23 from being over-finished and turning into scrap. The re-imaging detection device 42 is disposed on the workpiece table 216, and the finishing detection device 42 performs the online re-imaging detection on the finishing of the grinding wheel 23 and transmits the detection result to the motion control mechanism. The re-imaging detection method assists the margin detection, and determines whether the finishing of grinding wheel 23 is qualified. The detection greatly improves the detection efficiency, and also improves the finishing efficiency of the grinding wheel 23.

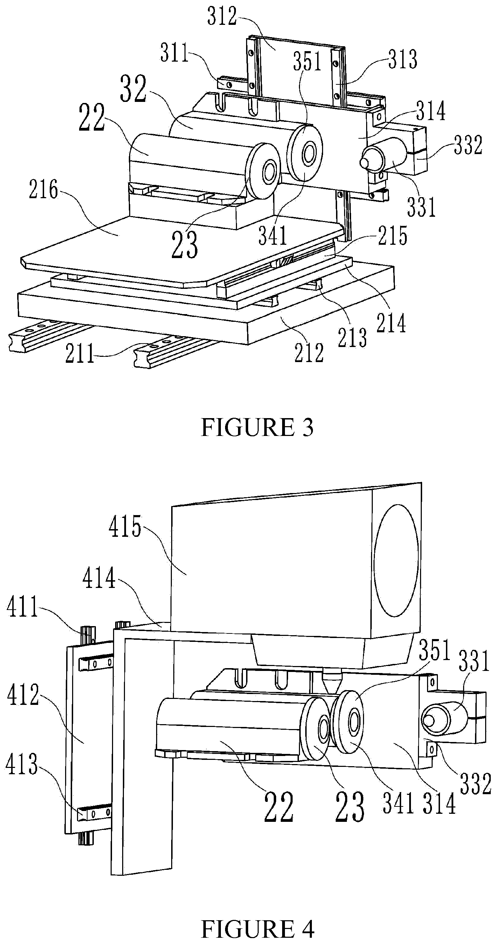

As shown in figures 2 and 4, the projection monitoring device 41 includes a longitudinal S-axis screw rod guide rail assembly 411, a projection support plate 412, a transverse R-axis screw rod guide rail assembly 413, a projector mounting bracket 414, a projector 415, and an auxiliary light source 416. The longitudinal S-axis screw rod guide rail assembly 411 and the transverse R-axis screw rod guide rail assembly 413 are vertically disposed on both sides of the projection support plate 412. The projection support plate 412 is connected to the projection post 13 through the longitudinal S-axis screw rod guide rail assembly 411, and can moves on the projection column 13 along the longitudinal S-axis through the longitudinal S-axis screw rod guide rail assembly 411. The projector mounting bracket 414 is mounted on the projection support plate 412 by a transverse R-axis screw rod guide rail assembly 413 and has a mounting plate, and the projector 415 is bolted to the mounting plate of the projector mounting bracket 414. The projector 415 can be moved with the projector mounting bracket 414 along the transverse R-axis on the projection support plate 412 by the transverse R-axis screw rod guide rail assembly 413, so that it is positioned above the grinding wheel 23. The projector 415 projects the grinding wheel 23, and the projection monitoring device 41 monitors the finishing of the grinding wheel 23 in real time by the projector 415. The auxiliary light source 416 is mounted on the workpiece table 216, directly below the lens of the projector 415, making the projection of the grinding wheel 23 clearer, which is convenient for projection by the projector 415.

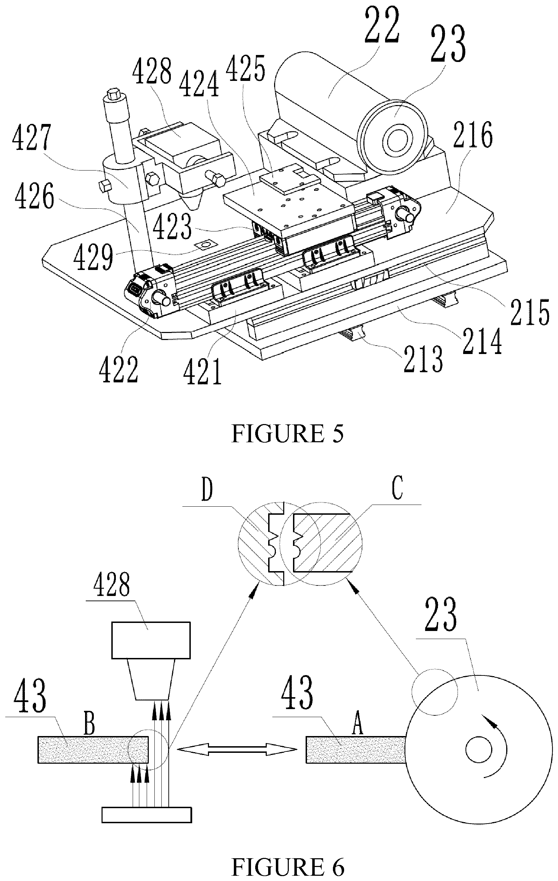

As shown in figure 5, the re-imaging detection device 42 includes a spacer 421, a re-imaging guide rail 422, a re-imaging slider 423, a re-imaging table 424, a pressing plate 425, a re-imaging post 426, a camera mounting bracket 427, and a re-imaging camera 428, a parallel backlight 429 and a graphite plate or ceramic plate 43. The re-imaging guide rail 422 is fixed on the workpiece table 216 by the spacer 421, and the re-imaging table 424 is disposed on the re-imaging guide rail 422 through the re-imaging slider 423. The re-imaging slider 423 is matched with the re-imaging guide rail 422, and the reflection guide 422 moves the re-imaging slider 423 by the movement of the transmission chain, thereby driving the re-imaging table 424 to slide on the re-imaging guide rail 422. The pressing plate 425 presses the graphite plate or ceramic plate 43 (see figure 6) onto the re-imaging table 424 by bolts. The re-imaging table 424 drives the graphite plate or ceramic plate 43 to slide on the re-imaging guide rail 422 through the re-imaging slider 423 to re-image the finishing profile of the grinding wheel 23. The rewinding post 426 is threaded onto the workpiece table 216, the re-imaging camera 428 is mounted on the re-imaging post 426 by the camera mounting bracket 427, and the position of the camera mounting bracket 427 on the re-imaging post 426 is adjustable to capture the re-imaging image and to perform re-imaging detection. The parallel backlight 429 is mounted on the workpiece table 216 at a position directly below the telecentric lens of the re-imaging camera 428 by bolts for illuminating the graphite plate or ceramic plate 43, so that the re-imaging camera 428 takes a re-imaging profile image.

The motion control mechanism includes a numerical control system and a servo motor. The numerical control system is connected with the re-imaging camera 428, and receives the re-imaging profile image taken by the re-imaging camera 428. The numerical control system is provided with an image processing software, and the image processing software compares the re-imaging profile images to determine whether finishing of the grinding wheel 23 is qualified. The numerical control system is also connected to the servo motor, each of the axis screw rods and the re-imaging guide rail 422 are respectively connected to the servo motor, and the servo motor transmits power to each of the axis screw rods or the re-imaging guide rail 422. In the present disclosure, the motion control mechanism controls the actions of the spindle S1 22, the spindle S2 32, the transverse X-axis screw rod guide rail assembly 211, the longitudinal Y-axis screw rod guide rail assembly 311, the vertical Z-axis screw rod guide rail assembly 313, the transverse U-axis screw rod guide rail assembly 215, the longitudinal V-axis screw rod guide rail assembly 213, the transverse R-axis screw rod guide rail assembly 413, the longitudinal S-axis screw rod guide rail assembly 411 and the re-imaging guide rail 422 through a numerical control system. Through combined action of transverse, longitudinal, and vertical axes, automation of finishing and detection of the grinding wheel 23 can be realized. In addition, in order to facilitate the operation, the numerical control system is also equipped with a corresponding operation panel, and the operator can operate the numerical control system through the operation panel to complete the finishing of the grinding wheel 23.

The exhaust dust removing system includes an exhaust fan, a duct and an air exhausting port 61. The air exhausting port 61 is suspended below the projector 415 through a bracket, and the exhaust fan is connected to the air extracting port 61 through a duct. The air exhausting amount at the air extracting port 61 is controlled by the exhaust fan. The exhaust dust removing system is mainly used as an auxiliary system to prevent the waste dust removed during the finishing of the grinding wheel 23 from causing interference to the finishing process and environmental pollution. In order to better ensure the finishing process and a good environment, the exhaust fan also has its own dust collection box and noise reduction device.

In this embodiment, each of the axis screw rods guide rail assemblies are two and arranged in parallel. The parallel placement of the two guide rails ensure the smoothness of movement. Each of the axis screw rod guide rail assemblies is provided with a dust cover, so as to prevent dust from entering the screw rod guide rails during movement.

In this embodiment, the finishing mechanism integrates three finishing methods: laser finishing, electric spark finishing, and mechanical finishing. Both the laser and the electric spark have high energy density and high removal rate, but the spot diameter path and the spark discharge path are difficult to control. So the grinding wheel 23 is roughly finished by laser finishing or electric spark finishing. Since laser finishing is highly efficient, laser finishing is preferred for rough finishing. The path controllability of the mechanical roller 351 is much higher than that of the laser and the electric spark. The mechanical finishing of the mechanical roller 351 is used for finishing of the grinding wheel 23, which can improve the finishing precision. Also, the less removal amount of the grinding wheel 23 during fine finishing leads to much less wear of the mechanical roller 351, thereby greatly increasing the service life of the mechanical roller 351 relative to a single mechanical finishing.

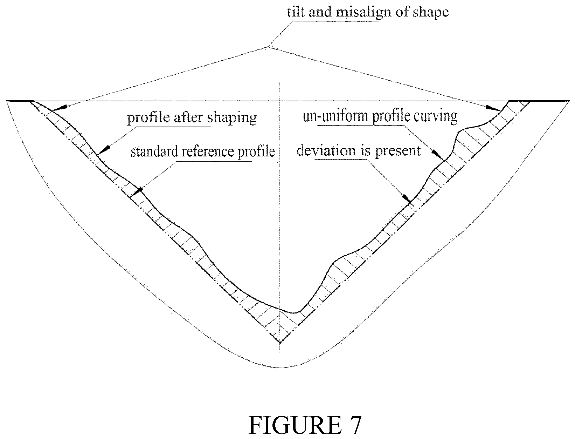

Since the grinding wheel 23 to be finished in this embodiment is a composite superhard material, the processing properties are unevenly distributed. However, the power density of the laser used in the laser finishing device is distributed according to a Gaussian function, and the laser has no fixed processing radius. In the process of laser shaping the grinding wheel 23, as shown in Figure 7, as to processing along the profile of the design, the actual machining result is not the same as the tool contact processing, and the profile shape of the tool path is obtained accurately. As to processing along a cross-section edge of the designed groove, the composition change of the material at different positions of the grinding wheel 23 causes continuous change of the effective machining radius. The actual machining profile presents a plurality of curved paths which are different from the designed linear arc path, making it difficult to realize programmed machining with high-precision shape. In addition, when the amount of removal is small, since the laser shaping does not span the entire abrasive grain, the radius change of the effective laser processing is almost unchanged. The difference between the trajectory formed by the initial machining and the trajectory of the initial machining tool track reflects the effective radius of the machining radius. For example, the deviation after the initial machining is tens of micrometers, which is smaller than the diameter of the abrasive grain, and the variation of the effective machining radius during the compensation process is similar to the rough machining. Therefore, the actual effective spot removal radius rule obtained by the initial processing is used to approximately compensate the effective spot removal radius of the machining. By designing the machining path to be a similar bending line, the laser compensation can be used for automatic finishing of shape, incline, tilt and misalign errors of the grinding wheel 23.

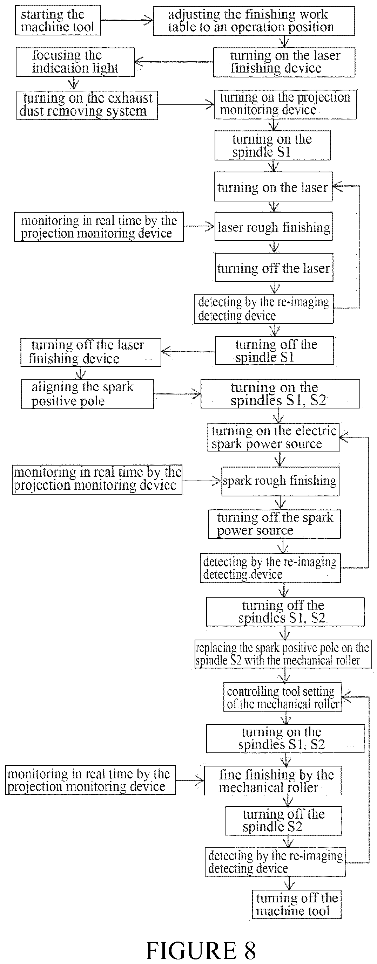

In the embodiment, the universal automatic composite grinding wheel finisher is as shown in figure 8, and the operation steps are as follows:
Step1: Mounting the grinding wheel 23 on the spindle S1 22, starting the machine tool, controlling the feeding motion of each linear shaft through the numerical control system, sending the grinding wheel 23 to the working position, and then sending the laser head 331 to the working position; turning on the laser 334 to give an indication light, performing focusing on the laser spot by the finishing feed device 31; turning on the spindle S1 22 to drive the grinding wheel 23 to rotate, performing rough laser finishing on the grinding wheel 23 by the laser head 331 in the laser finishing device 33, turning on the exhaust dust removing system and the projection monitoring device 41, monitoring the grinding wheel 23 in real time by the projector 415 to prevent the grinding wheel 23 from being over-finished; when the projector 415 observes that the grinding wheel 23 is finished to a certain extent, turning off the spindle S1 22, and controlling the re-imaging guide rail 422 by the numerical control system to control the re-imaging slider 423 move to control the feeding motion of the re-imaging table 424, and detecting the grinding wheel 23 by the merging method, if the detecting is passed, performing electric spark finishing on the grinding wheel 23, and if the detecting fails, continuously operating the spindle S1 22 and the laser finishing device and performing laser finishing on the grinding wheel 23 until the detection by the re-imaging method is passed, and turning off the spindle S1 22 after the detection is passed.
Step2: Controlling the electric spark positive pole 341 to move to the working position through the numerical control system, and aligning the grinding wheel 23 to the finishing position; turning on the spindle S1 22 and the spindle S2 32, turning on the electric spark power source for electric spark rough finishing of the grinding wheel 23 under the real-time monitoring of the projector 415, when the projector 415 observes that the grinding wheel 23 is finished to a certain extent, turning off the electric spark power source, and detecting the grinding wheel 23 by the re-imaging method; if the detecting is passed, performing mechanical finishing, and if the detecting fails, continuously operating the electric spark power source to perform rough finishing on the grinding wheel 23 until the detection by the re-imaging method is passed, and turning off the spindle S1 22 and the spindle S2 32 after the detection is passed.
Step 3: Replacing the spark positive pole 341 on the spindle S2 32 with the mechanical roller 351, controlling tool setting of the mechanical roller 351 by the numerical control system, and starting the spindle S1 22 and the spindle S2 32 to mechanically finish the grinding wheel 23 under the real-time monitoring of the projector 415. When the projector 415 observes that the grinding wheel 23 is finished to a certain extent, turning off the spindle S2 32, and detecting the grinding wheel 23 by the re-imaging method; if the detecting is passed, turning off the machine tool, and removing the grinding wheel 23 finished; if the detecting fails, re-setting the machine roller 351, and starting the spindle S2 32 to finish the grinding wheel 23 until the detection by the re-imaging method is passed. After the test is passed, turning off the machine tool, and removing the grinding wheel 23 finished.

In the embodiment, the steps of detecting the re-imaging method are: controlling the movement of the traverse guide 422 by the numerical control system to drive the traversing slider 423 to move, and then driving the re-imaging table 424 to complete the feeding motion, as shown in figure 6, moving the graphite plate or the ceramic plate 43 mounted on the re-imaging table 424 from the B position to the A position for polishing and re-imaging, and polishing and re-imaging the rotating profile of the grinding wheel 23 on the graphite plate or the ceramic plate 43, C in figure 6 is the profile of the grinding wheel 23, D is the re-imaging profile of the graphite plate or the ceramic plate 43; moving the polished graphite plate or ceramic plate 43 from the A position to the B position through the re-imaging table 424 and positioning it directly below the telecentric lens of the re-imaging camera 428, illuminating the graphite plate or the ceramic plate 43 by the parallel backlight 429, taking the re-imaging profile image by the re-imaging camera 428 through the telecentric lens, transmitting the taken re-imaging image to the numerical control system, using the image processing software to digitize the image by the numerical control system, and comparing with the standard profile image, calculating the deviation value, and determining whether the finishing margin and accuracy of the grinding wheel 23 are qualified according to the magnitude of the deviation value.

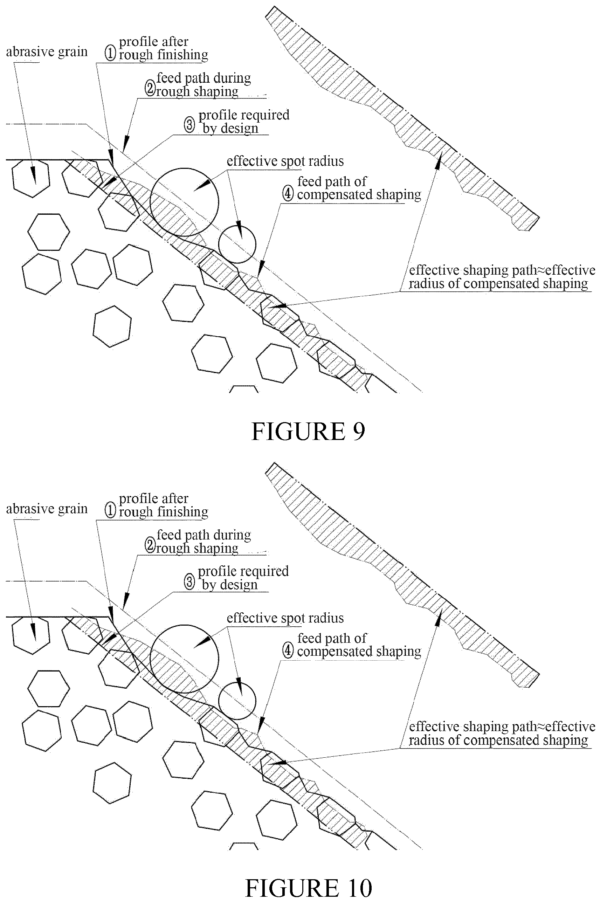

The laser automatic compensation finishing steps in the embodiment are: approximately compensating the effective spot removal radius by using the actual effective spot removal radius rule obtained by the initial processing, and designing the processing path into a similar bending line. As shown in figures 9 to 10, the V-groove grinding wheel 23 is taken as an example: first, dividing the path formed by the dense line of the grinding wheel 23 after the initial processing, and processing only the V-shaped groove portion during the finishing process, and using the remaining portion as a baseline. The two sides of the V-shaped groove have different orientations and are treated separately, and the bottom rounded corners are also treated separately. The turning point feature of the V-groove is used as the ideal profile dividing point. The local extreme point obtained by taking only one derivative is used as the dividing point. In order to prevent noise interference, the extreme value is selected by smooth processing and appropriate step size to avoid taking pseudo extreme value. Then, the difference between the left and right sides of the actual profile 1 of the rough shaping wheel 23 and the corresponding sides of the rough shaping feed path 2 is calculated as the effective machining radius, which is approximated as the effective machining radius of the compensation machining. In order to obtain the straight profile, the effective machining radius of the rough machining of the corresponding point is used to approximate the effective machining radius of the fine machining, and the compensation path of the straight line is obtained. The bottom arc segment is caused by the rough machining of the rough cutting edge, which makes it difficult to analyze the effective machining radius. This point is expanded into a plurality of machining points, and the end points of the compensation machining paths on both sides are used as the machining paths. The curve obtained by combining the three segment paths is taken as a complete laser-compensated feed path 4, and the profile 3 required by design of the grinding wheel is further finished.

The electrical components appearing herein are electrically connected to the external main controller and the 220V power source, and the main controller can be a conventionally known device that controls the computer or the like.

While the principles of the present disclosure have been described in combination with referred embodiments of the present disclosure, for those of ordinary skill in the art, the above embodiments are merely illustrative of the exemplary implementation of the invention and are not intended to limit the scope of the invention, which is defined by the appended claims.

## Claims

1. A universal automatic composite grinding wheel finisher, wherein the finisher comprises a workpiece working mechanism, a finishing mechanism, a detecting mechanism and a motion control mechanism, the workpiece working mechanism, the finishing mechanism and the detecting mechanism being respectively connected to the motion control mechanism;
the workpiece working mechanism adjusts a grinding wheel (23) to be finished to a desired position for finishing, and causes the grinding wheel (23) to operate in a posture required for finishing;
the finishing mechanism comprises a finishing feed device (31), a spindle S2 (32), a laser finishing device (33), an electric spark finishing device (34) and a mechanical finishing device (35), the spindle S2 (32) and the laser finishing device (33) being mounted on the finishing feed device (31), the spark finishing device (34) or the mechanical finishing device (35) being mounted at an end of the spindle S2 (32) the finishing mechanism driving the laser finishing device (33), the spark finishing device (34) or the mechanical finishing device (35) to move to a desired position by the finishing feed device (31), for finishing the grinding wheel (23);
the detecting mechanism comprises a projection monitoring device (41) and a re-imaging detection device (42); the projection monitoring device (41) being fixed above the workpiece working mechanism to monitor a finishing of the grinding wheel (23) in real time; the re-imaging detection device (42) comprises a spacer (421), a re-imaging guide rail (422), and a re-imaging slider (423), re-imaging table (424), a pressing plate (425), a re-imaging column (426), a camera mounting bracket (427), a re-imaging camera (428), a parallel backlight (429), and a graphite plate or ceramic plate (43); the re-imaging guide rail (422) being fixed on the workpiece working mechanism by the spacer (421), the re-imaging table (424) being disposed at the re-imaging guide rail (422) by re-imaging slider (423), the re-imaging slider (423) cooperating with the re-imaging guide rail (422), and the pressing plate (425) pressing the graphite plate or ceramic plate (43) on the re-imaging table (424); the re-imaging table (424) driving the graphite plate or ceramic plate (43) to move on the re-imaging guide rail (422) by the re-imaging slider (423), the graphite plate or ceramic plate (43) re-imaging a finishing profile of the grinding wheel (23); the re-imaging column (426) being fixed on the workpiece working mechanism, and the re-imaging camera (428) being mounted on the re-imaging column (426) by the camera mounting bracket (427) the parallel backlight (429) being mounted on the workpiece working mechanism at a position directly below a lens of the re-imaging camera (428) and illuminating the graphite plate or ceramic plate (43), and the re-imaging camera (428) taking a re-imaging profile image; the re-imaging detection device (42) being disposed on the workpiece working mechanism, performing online re-imaging detection on the finishing of the grinding wheel (23), and transmitting a detection result to the motion control mechanism; and
the motion control mechanism obtains a machining allowance and an accuracy according to the detection result, determines whether the grinding wheel (23) is finished, and based on the determination result, the motion control mechanism controls the workpiece working mechanism, the finishing mechanism, and the detection mechanism to operate.

2. The universal automatic composite grinding wheel finisher according to claim 1, wherein the finishing feed device (31) comprises a longitudinal Y-axis screw rod guide rail assembly (311), a finishing table support plate (312), a vertical Z-axis screw rod guide rail assembly (313) and a finishing table (314), the longitudinal Y-axis screw rod guide rail assembly (311) and the vertical Z-axis screw rod guide rail assembly (313) being vertically disposed at two sides of the finishing table support plate (312), the finishing table support plate (312) being moved along a longitudinal Y-axis on a side of the workpiece working mechanism by the longitudinal Y-axis screw rod guide rail assembly (311); the finishing table (314) being moved on the finishing table support plate (312) along the vertical Z-axis by the vertical Z-axis screw rod guide rail assembly (313); and the spindle S2 (32) being mounted on the finishing table (314).

3. The universal automatic composite grinding wheel finisher according to claim 2, wherein the laser finishing device (33) comprises a laser head (331), a conductive fiber (333), and a laser (334), the laser head (331)being attached to the finishing table (314), the laser (334) being connected to the laser head (331) via the conductive fiber (333), and the laser (334) emitting a laser through the laser head (331) and performing laser finishing to the grinding wheel (23).

4. The universal automatic composite grinding wheel finisher according to claim 1, wherein the electric spark finishing device (34) comprises an electric spark power source and an electric spark positive electrode (341), the electric spark positive electrode (341) being at an end of the spindle S2 (32), the spark power source supplying power to the spark positive electrode, and the spark positive electrode (341) performing spark finishing to the grinding wheel (23) by the spindle S2 (32).

5. The universal automatic composite grinding wheel finisher according to claim 4, wherein the spark positive electrode (341) is a disc-shaped member made of copper material or an electroplated metal grinding wheel that meets a discharge requirement.

6. The universal automatic composite grinding wheel finisher according to claim 1, wherein the mechanical finishing device (35) is a mechanical roller (351), the mechanical roller (351) being mounted on an end of the spindle S2 (32), mechanically finishing the grinding wheel (23) with the spindle S2 (32).

7. The universal automatic composite grinding wheel finisher according to claim 1, wherein the projection monitoring device (41) comprises a longitudinal S-axis screw rod guide rail assembly (411), a projection support plate (412), a transverse R-axis screw rod guide rail assembly (413), a projector mounting bracket (414) and a projector (415); the longitudinal S-axis screw rod guide rail assembly (411) and the transverse R-axis screw rod guide rail assembly (413) being vertically disposed on opposite sides of the projection support plate (412), and the projection support plate (412) being moved along a longitudinal S-axis above the workpiece operating mechanism by the longitudinal S-axis screw rod guide rail assembly (411); the projector mounting bracket (414) being mounted on the projection support plate (412) by the transverse R-axis screw rod assembly (413), the projector (415) being disposed on the projector mounting bracket (414) and being above the grinding wheel (23) by movement of the transverse R-axis screw rod guide rail assembly (413) on the projection support plate (412) along a transverse R-axis.

8. The universal automatic composite grinding wheel finisher according to claim 1, wherein the finisher further comprises a tool body, the tool body comprising a base(11), a gantry bracket (12) and a projection column (13), the workpiece working mechanism being mounted on the base (11), the gantry bracket (12) being vertically mounted at a right side of the base (11), and the finishing mechanism being mounted on the gantry bracket (12) by the finishing feed device (31); the projection column (13) being vertically mounted at a rear side of the base (11), the projection monitoring device (41) being mounted on the projection column (13); and the base (11), the gantry bracket (12) and the projection column (13) being made of marble.

9. The universal automatic composite grinding wheel finisher according to claim 1, wherein the motion control mechanism comprises a numerical control system and a servo motor, the numerical control system being connected tothe re-imaging detection device (42), receiving a re-imaging profile image taken by the re-imaging detection device (42) and determining whether finishing of the grinding wheel (23) meets requirement, the numerical control system being connected to the servo motor, the servo motor being connected to the workpiece working mechanism, the finishing mechanism being connected to the detecting mechanism, and the motion control mechanism controlling the workpiece working mechanism, the finishing mechanism and the detecting mechanism to operate by the numerical control system.

## Patentansprüche

1. Universelles automatisches Verbundschleifscheiben-Endbearbeitungsgerät, wobei das Endbearbeitungsgerät einen Werkstückbearbeitungsmechanismus, einen Endbearbeitungsmechanismus, einen Erfassungsmechanismus und einen Bewegungssteuerungsmechanismus umfasst, wobei der Werkstückbearbeitungsmechanismus, der Endbearbeitungsmechanismus und der Erfassungsmechanismus jeweils mit dem Bewegungssteuerungsmechanismus verbunden sind;
wobei der Werkstückbearbeitungsmechanismus eine fertigzustellende Schleifscheibe (23) auf eine gewünschte Position zur Endbearbeitung einstellt und bewirkt, dass die Schleifscheibe (23) in einer für die Endbearbeitung erforderlichen Stellung arbeitet;
wobei der Endbearbeitungsmechanismus eine Endbearbeitungsvorschubvorrichtung (31), eine Spindel S2 (32), eine Laserendbearbeitungsvorrichtung (33), eine elektrische Funkenendbearbeitungsvorrichtung (34) und eine mechanische Endbearbeitungsvorrichtung (35) umfasst, wobei die Spindel S2 (32) und die Laserendbearbeitungsvorrichtung (33) an der Endbearbeitungsvorschubvorrichtung (31) angebracht sind und die elektrische Funkenendbearbeitungsvorrichtung (34) oder die mechanische Endbearbeitungsvorrichtung (35) an einem Ende der Spindel S2 (32) angebracht ist, wobei der Endbearbeitungsmechanismus die Laserendbearbeitungsvorrichtung (33), die Funken-Endbearbeitungsvorrichtung (34) oder die mechanische Endbearbeitungsvorrichtung (35) antreibt, um sich durch die Endbearbeitungsvorschubvorrichtung (31) zu einer gewünschten Position zu bewegen, um die Schleifscheibe (23) fertig zu bearbeiten;
wobei der Erfassungsmechanismus eine Projektionsüberwachungsvorrichtung (41) und eine Nachbild-Erfassungsvorrichtung (42) umfasst; wobei die Proj ektionsüberwachungsvorrichtung (41) oberhalb des Werkstückbearbeitungsmechanismus befestigt ist, um eine Endbearbeitung der Schleifscheibe (23) in Echtzeit zu überwachen; wobei die Nachbild-Erfassungsvorrichtung (42) einen Abstandshalter (421), eine Nachbild-Führungsschiene (422) und einen Nachbild-Schieber (423), einen Nachbild-Tisch (424), eine Druckplatte (425), eine Nachbild-Säule (426), eine Kamera-Montagehalterung (427), eine Nachbild-Kamera (428), eine parallele Hintergrundbeleuchtung (429) und eine Graphitplatte oder Keramikplatte (43) umfasst; wobei die Nachbild-Führungsschiene (422) an dem Werkstückbearbeitungsmechanismus durch den Abstandshalter (421) befestigt ist, wobei der Nachbild-Tisch (424) an der Nachbild-Führungsschiene (422) durch einen Nachbild-Schieber (423) angeordnet ist, wobei der Nachbild-Schieber (423) mit der Nachbild-Führungsschiene (422) zusammenwirkt, und wobei die Druckplatte (425) die Graphitplatte oder Keramikplatte (43) auf den Nachbild-Tisch (424) drückt; wobei der Nachbild-Tisch (424) die Graphitplatte oder Keramikplatte (43) antreibt, um sich auf der Nachbild-Führungsschiene (422) durch den Nachbild-Schieber (423) zu bewegen, wobei die Graphitplatte oder Keramikplatte (43) ein Endbearbeitungsprofil der Schleifscheibe (23) wieder abbildet; wobei die Nachbild-Säule (426) an dem Werkstückbearbeitungsmechanismus befestigt ist und die Nachbild-Kamera (428) an der Nachbild-Säule (426) durch die Kamera-Montagehalterung (427) angebracht ist, wobei die parallele Hintergrundbeleuchtung (429) an dem Werkstückbearbeitungsmechanismus an einer Position direkt unter einer Linse der Nachbild-Kamera (428) angebracht ist und die Graphitplatte oder Keramikplatte (43) beleuchtet, und wobei die Nachbild-Kamera (428) ein Nachbild-Profilbild aufnimmt; wobei die Nachbild-Erfassungsvorrichtung (42) an dem Werkstückbearbeitungsmechanismus angeordnet ist und eine Online-Nachbilderfassung der Endbearbeitung der Schleifscheibe (23) durchführt und ein Erfassungsergebnis an den Bewegungssteuerungsmechanismus überträgt; und
wobei der Bewegungssteuerungsmechanismus eine Bearbeitungszugabe und eine Genauigkeit gemäß dem Erfassungsergebnis erhält und bestimmt, ob die Schleifscheibe (23) fertig ist, und wobei der Bewegungssteuerungmechanismus basierend auf dem Bestimmungsergebnis den Werkstückbearbeitungsmechanismus, den Endbearbeitungsmechanismus und den Erfassungsmechanismus zu arbeiten steuert.

2. Universelles automatisches Verbundschleifscheiben-Endbearbeitungsgerät nach Anspruch 1, wobei die Endbearbeitungsvorschubvorrichtung (31) eine longitudinale Y-Achsen-Schraubenstangen-Führungsschienenanordnung (311), eine Endbearbeitungtisch-Trägerplatte (312), eine vertikale Z-Achsen-Schraubenstangen-Führungsschienenanordnung (313) und einen Endbearbeitungtisch (314) umfasst, wobei die longitudinale Y-Achsen-Schraubenstangen-Führungsschienenbaugruppe (311) und die vertikale Z-Achsen-Schraubenstangen-Führungsschienenbaugruppe (313) vertikal an zwei Seiten der Endbearbeitungtisch-Trägerplatte (312) angeordnet sind, wobei die Endfertigungstisch-Trägerplatte (312) entlang einer longitudinalen Y-Achse auf einer Seite des Werkstückbearbeitungsmechanismus durch die longitudinale Y-Achsen-Schraubenstangen-Führungsschienenbaugruppe (311) bewegt wird; wobei der Endbearbeitungstisch (314) auf der Endbearbeitungstisch-Trägerplatte (312) entlang der vertikalen Z-Achse durch die vertikale Z-Achsen-Schraubenstangen-Führungsschienenanordnung (313) bewegt wird; und wobei die Spindel S2 (32) auf dem Endbearbeitungstisch (314) montiert ist.

3. Universelles automatisches Verbundschleifscheiben-Endbearbeitungsgerät nach Anspruch 2, wobei die Laserendbearbeitungsvorrichtung (33) einen Laserkopf (331), eine leitende Faser (333) und einen Laser (334) umfasst, wobei der Laserkopf (331) an dem Endbearbeitungstisch (314) angebracht ist, wobei der Laser (334) mit dem Laserkopf (331) über die leitende Faser (333) verbunden ist und der Laser (334) einen Laser durch den Laserkopf (331) emittiert und eine Laserendbearbeitung der Schleifscheibe (23) durchführt.

4. Universelles automatisches Verbundschleifscheiben-Endbearbeitungsgerät nach Anspruch 1, wobei dieelektrische Funkenendbearbeitungsvorrichtung (34) eine elektrische Funkenenergiequelle und eine elektrische Funkenpositiv-Elektrode (341) umfasst, wobei sich die elektrische Funkenpositiv-Elektrode (341) an einem Ende der Spindel S2 (32) befindet, wobei die Funkenenergiequelle die Funkenpositiv-Elektrode mit Energie versorgt und die Funkenpositiv-Elektrode (341) die Funkenendbearbeitung der Schleifscheibe (23) durch die Spindel S2 (32) durchführt.

5. Universelles automatisches Verbundschleifscheiben-Endbearbeitungsgerät nach Anspruch 4, wobei die Funkenpositiv-Elektrode (341) ein scheibenförmiges Element aus Kupfermaterial oder eine elektroplattierte Metallschleifscheibe ist, die eine Entladungsanforderung erfüllt.

6. Universelles automatisches Verbundschleifscheiben-Endbearbeitungsgerät nach Anspruch 1, wobei die mechanische Endbearbeitungsvorrichtung (35) eine mechanische Walze (351) ist, wobei die mechanische Walze (351) an einem Ende der Spindel S2 (32) angebracht ist und die mechanische Endbearbeitung der Schleifscheibe (23) durch die Spindel S2 (32) durchführt.

7. Universelles automatisches Verbundschleifscheiben-Endbearbeitungsgerät nach Anspruch 1, wobei die Projektionsüberwachungsvorrichtung (41) eine longitudinale S-Achsen-Schraubenstangen-Führungsschienenbaugruppe (411), eine Projektionsstützplatte (412), eine transversale R-Achsen-Schraubenstangen-Führungsschienenbaugruppe (413), eine Projektor-Montagehalterung (414) und einen Projektor (415) umfasst; wobei die longitudinale S-Achsen-Schraubenstangen-Führungsschienenbaugruppe (411) und die transversale R-Achsen-Schraubenstangen-Führungsschienenbaugruppe (413) vertikal auf gegenüberliegenden Seiten der Projektionsstützplatte (412) angeordnet sind und die Projektionsstützplatte (412) durch die longitudinale S-Achsen-Schraubenstangen-Führungsschienenbaugruppe (411) entlang einer longitudinalen S-Achse oberhalb des Werkstückbearbeitungsmechanismus bewegt wird; wobei die Projektor-Montagehalterung (414) an der Projektionsstützplatte (412) durch die transversaleR-Achsen-Schraubenstangen-Führungsschienenbaugruppe (413) montiert ist, wobei der Projektor (415) an der Projektor-Montagehalterung (414) angeordnet ist und sich durch die Bewegung der transversalenR-Achsen-Schraubenstangen-Führungsschienenbaugruppe (413) an der Projektionsstützplatte (412) entlang transversale R-Achse über der Schleifscheibe (23) befindet.

8. Universelles automatisches Verbundschleifscheiben-Endbearbeitungsgerät nach Anspruch 1, wobeidas Endbearbeitungsgerät ferner einen Werkzeugkörper umfasst, wobei der Werkzeugkörper eine Basis (11), eine Portalhalterung (12) und eine Projektionssäule (13) umfasst, wobei der Werkstückbearbeitungsmechanismus auf der Basis (11) montiert ist, wobei die Portalhalterung (12) vertikal an einer rechten Seite der Basis (11) montiert ist, und wobei der Endbearbeitungsmechanismus an der Portalhalterung (12) durch die Endbearbeitungsvorschubvorrichtung (31) montiert ist; wobei die Projektionssäule (13) vertikal an einer Rückseite der Basis (11) angebracht ist, wobei die Projektionsüberwachungsvorrichtung (41) an der Projektionssäule (13) angebracht ist; und wobei die Basis (11), die Portalhalterung (12) und die Projektionssäule (13) aus Marmor hergestellt sind.

9. Universelles automatisches Verbundschleifscheiben-Endbearbeitungsgerät nach Anspruch 1, wobei der Bewegungssteuerungsmechanismus ein numerisches Steuersystem und einen Servomotor umfasst, wobei das numerische Steuersystem mit der Nachbild-Erfassungsvorrichtung (42) verbunden ist und ein von der Nachbild-Erfassungsvorrichtung (42) aufgenommenes Nachbild-Profilbild empfängt und bestimmt, ob die Endbearbeitung der Schleifscheibe (23) die Anforderung erfüllt, wobei das numerische Steuersystem mit dem Servomotor verbunden ist, wobei der Servomotor mit dem Werkstückbearbeitungsmechanismus verbunden ist, wobei der Endbearbeitungsmechanismus mit dem Erfassungsmechanismus verbunden ist, und wobei der Bewegungssteuerungsmechanismus den Werkstückbearbeitungsmechanismus, den Endbearbeitungsmechanismus und den Erfassungsmechanismus steuert, um durch das numerische Steuersystem betrieben zu werden.

## Revendications

1. Finisseur de meule composite automatique universel, dans lequel ledit finisseur comprend un mécanisme de travail de pièce, un mécanisme de finition, un mécanisme de détection et un mécanisme de commande de mouvement, ledit mécanisme de travail de pièce, ledit mécanisme de finition et ledit mécanisme de détection étant respectivement connectés audit mécanisme de commande de mouvement;
ledit mécanisme de travail de pièce ajuste une meule (23) à finir à une position souhaitée pour finition, et amène ladite meule (23) à fonctionner dans une position requise pour finition;
ledit mécanisme de finition comprend un dispositif d'alimentation de finition (31), une broche S2 (32), un dispositif de finition laser (33), un dispositif de finition par étincelle électrique (34) et un dispositif de finition mécanique (35), ladite broche S2 (32) et ledit dispositif de finition laser (33) étant monté sur ledit dispositif d'alimentation de finition (31), ledit dispositif de finition par étincelage (34) ou ledit dispositif de finition mécanique (35) étant monté à une extrémité de ladite broche S2 (32), ledit mécanisme de finition entraînant ledit dispositif de finition laser (33), ledit dispositif de finition par étincelage (34) ou ledit dispositif de finition mécanique (35) à déplacer vers une position souhaitée par ledit dispositif d'alimentation de finition (31), pour finir ladite meule (23);
ledit mécanisme de détection comprend un dispositif de surveillance de projection (41) et un dispositif de détection de réimagerie (42); ledit dispositif de surveillance de projection (41) étant fixé au-dessus dudit mécanisme de travail de pièce pour surveiller une finition de ladite meule (23) en temps réel; ledit dispositif de détection de réimagerie (42) comprend une entretoise (421), un rail de guidage de réimagerie (422) et un coulisseau de réimagerie (423), une table de réimagerie (424), une plaque de pression (425), une colonne de réimagerie (426), un support de montage de caméra (427), une caméra de réimagerie (428), un rétroéclairage parallèle (429) et une plaque de graphite ou une plaque de céramique (43); ledit rail de guidage de réimagerie (422) étant fixé sur ledit mécanisme de travail de pièce par ladite entretoise (421), ladite table de réimagerie (424) étant disposée au niveau dudit rail de guidage de réimagerie (422) par coulisseau de réimagerie (423), ledit coulisseau de réimagerie (423) coopérant avec ledit rail de guidage de réimagerie (422), et ladite plaque de pression (425) pressant ladite plaque de graphite ou plaque de céramique (43) sur ladite table de réimagerie (424); ladite table de réimagerie (424) entraînant ladite plaque de graphite ou plaque de céramique (43) pour se déplacer sur ledit rail de guidage de réimagerie (422) par ledit coulisseau de réimagerie (423), ladite plaque de graphite ou plaque de céramique (43) reproduisant un profil de finition de ladite meule (23); ladite colonne de réimagerie (426) étant fixée sur ledit mécanisme de travail de pièce, et ladite caméra de réimagerie (428) étant montée sur ladite colonne de réimagerie (426) par ledit support de montage de caméra (427), ledit rétroéclairage parallèle (429) étant monté sur ledit mécanisme de travail de pièce à une position directement au-dessous d'une lentille de ladite caméra de réimagerie (428) et éclairant ladite plaque de graphite ou plaque de céramique (43), et ladite caméra de réimagerie (428) prenant une image de profil de réimagerie; ledit dispositif de détection de réimagerie (42) étant disposé sur ledit mécanisme de travail de pièce, effectuant une détection de réimagerie en ligne sur la finition de ladite meule (23) et transmettant un résultat de détection audit mécanisme de commande de mouvement; et
ledit mécanisme de commande de mouvement obtient une tolérance d'usinage et une précision selon ledit résultat de détection, détermine si ladite meule (23) est terminée, et sur la base dudit résultat de détermination, ledit mécanisme de commande de mouvement commande ledit mécanisme de travail de pièce, ledit mécanisme de finition, et ledit mécanisme de détection pour fonctionner.

2. Ledit finisseur de meule composite automatique universel selon la revendication 1, dans lequel ledit dispositif d'alimentation de finition (31) comprend un ensemble de rail de guidage de tige filetée d'axe Y longitudinal (311), une plaque de support de table de finition (312), un ensemble de rail de guidage de tige filetée d'axe Z vertical (313) et une table de finition (314), ledit ensemble de rail de guidage de tige filetée d'axe Y longitudinal (311) et ledit ensemble de rail de guidage de tige filetée d'axe Z vertical (313) étant disposés verticalement sur deux côtés de ladite plaque de support de table de finition (312), ladite plaque de support de table de finition (312) étant déplacée le long d'un axe Y longitudinal sur un côté dudit mécanisme de travail de pièce par ledit ensemble de rail de guidage de tige filetée d'axe Y longitudinal (311); ladite table de finition (314) étant déplacée sur ladite plaque de support de table de finition (312) le long dudit axe Z vertical par ledit ensemble de rail de guidage de tige filetée d'axe Z vertical (313); et ladite broche S2 (32) étant montée sur ladite table de finition (314).

3. Ledit finisseur de meule composite automatique universel selon la revendication 2, dans lequel ledit dispositif de finition laser (33) comprend une tête laser (331), une fibre conductrice (333) et un laser (334), ladite tête laser (331) étant fixé à ladite table de finition (314), ledit laser (334) étant connecté à ladite tête laser (331) via ladite fibre conductrice (333), et ledit laser (334) émettant un laser à travers ladite tête laser (331) et effectuant finition au laser de ladite meule (23).

4. Ledit finisseur de meule composite automatique universel selon la revendication 1, dans lequel ledit dispositif de finition par étincelles électriques (34) comprend une source d'énergie à étincelles électriques et une électrode positive à étincelles électriques (341), ladite électrode positive à étincelles électriques (341) étant à une l'extrémité de ladite broche S2 (32), ladite source d'énergie à étincelles fournissant de l'énergie à ladite électrode positive à étincelles, et ladite électrode positive à étincelles (341) effectuant une finition par étincelles sur ladite meule (23) par ladite broche S2 (32).

5. Ledit finisseur de meule composite automatique universel selon la revendication 4, dans lequel ladite électrode positive à étincelles (341) est un élément en forme de disque constitué d'un matériau en cuivre ou d'une meule en métal galvanisé qui répond à une exigence de décharge.

6. Ledit finisseur de meule composite automatique universel selon la revendication 1, dans lequel ledit dispositif de finition mécanique (35) est un rouleau mécanique (351), ledit rouleau mécanique (351) étant monté sur une extrémité de ladite broche S2 (32), mécaniquement finir ladite meule (23) avec ladite broche S2 (32).

7. Ledit finisseur de meule composite automatique universel selon la revendication 1, dans lequel ledit dispositif de surveillance de projection (41) comprend un ensemble de rail de guidage de tige filetée d'axe S longitudinal (411), une plaque de support de projection (412), un ensemble de rail de guidage de tige filetée d'axe R transversal (413), un support de montage de projecteur (414) et un projecteur (415); ledit ensemble de rail de guidage de tige filetée d'axe S longitudinal (411) et ledit ensemble de rail de guidage de tige filetée d'axe R transversal (413) étant disposés verticalement sur des côtés opposés de ladite plaque de support de projection (412), et ladite plaque de support de projection (412) être déplacé le long d'un axe S longitudinal au-dessus dudit mécanisme d'actionnement de pièce par ledit ensemble de rail de guidage de tige filetée d'axe S longitudinal (411); ledit support de montage de projecteur (414) étant monté sur ladite plaque de support de projection (412) par ledit ensemble de rail de guidage de tige filetée d'axe R transversal (413), ledit projecteur (415) étant disposé sur ledit support de montage de projecteur (414) et étant au-dessus de ladite meule (23) par déplacement dudit ensemble de rail de guidage de tige filetée d'axe R transversal (413) sur ladite plaque de support de saillie (412) le long d'un axe R transversal.

8. Ledit finisseur de meule composite automatique universel selon la revendication 1, dans lequel ledit finisseur comprend en outre un corps d'outil, ledit corps d'outil comprenant une base (11), un support de portique (12) et une colonne de projection (13), ladite mécanisme de travail de pièce étant montée sur ladite base (11), ledit support de portique (12) étant monté verticalement sur un côté droit de ladite base (11), et ledit mécanisme de finition étant monté sur ledit support de portique (12) par ledit dispositif d'alimentation de finition (31); ladite colonne de projection (13) étant montée verticalement sur un côté arrière de ladite base (11), ledit dispositif de surveillance de projection (41) étant monté sur ladite colonne de projection (13); et ladite base (11), ledit support de portique (12) et ladite colonne de projection (13) étant en marbre.

9. Ledit finisseur de meule composite automatique universel selon la revendication 1, dans lequel ledit mécanisme de commande de mouvement comprend un système de commande numérique et un servomoteur, ledit système de commande numérique étant connecté audit dispositif de détection de réimagerie (42), recevant une image de profil de réimagerie prise par ledit dispositif de détection de réimagerie (42) et déterminant si la finition de ladite meule (23) répond à l'exigence, ledit système de commande numérique étant connecté audit servomoteur, ledit servomoteur étant connecté audit mécanisme de travail de pièce, ledit mécanisme de finition étant connecté audit mécanisme de détection, et ledit mécanisme de commande de mouvement commandant ledit mécanisme de travail de pièce, ledit mécanisme de finition et ledit mécanisme de détection pour fonctionner par ledit système de commande numérique.
